# EUROPEAN PATENT SPECIFICATION

(11) **EP 0 660 787 B1**
(45) Date of publication and mention of the grant of the patent: **10.05.2000**
(21) Application number: 93921330.2
(22) Date of filing: 02.09.1993
(51) Int. Cl.: B60R 19/34, B60R 19/04, B60R 19/26, E01F 13/00, E01F 15/00

(54) **IMPACT ATTENUATION DEVICE**
ANPRALLDÄMPFER
DISPOSITIF D'AMORTISSEMENT DE CHOCS

(30) Priority: 02.09.1992 US 939084
(43) Date of publication of application: 05.07.1995
(73) Proprietor: VANDERBILT UNIVERSITY, Nashville, TN 37240 (US)
(72) Inventor: CARNEY, John, F., III, Nashville, TN 37215 (US)
(74) Representative: Brereton, Paul Arthur
(86) International application number: US9308314
(87) International publication number: WO9405527

(56) References cited:
- WO-A-93/23626
- US-A- 3 130 998
- US-A- 3 643 924
- US-A- 3 845 936
- US-A- 4 200 310
- US-A- 4 645 375
- US-A- 4 658 941
- US-A- 4 711 481
- US-A- 5 011 326
- US-A- 5 031 947
- US-A- 5 125 762

## Description

### TECHNICAL FIELD

The present invention relates generally to an impact attenuation device and more particularly to an energy absorbing system employable for reducing the severity of vehicular collisions, especially the type involving a fast moving motor vehicle and a work piece such as a road barrier or a highway service vehicle used in highway maintenance repair operations, from the standpoint of limiting the extent of injuries suffered by people and the damage done by the equipment as a consequence of such collisions.

### BACKGROUND ART

It will be appreciated by those skilled in the art that public highway and safety departments have employed a variety accident preventive measures in an effort to prevent and/or reduce the personal injuries and property damages resulting from vehicular collisions occurring on the nations's major highways as well as its local roads. Such accident preventive measures may be classifiable for purposes of this discussion into two basic categories: warning devices designed to be operative to forestall the occurrence of a vehicular collision and protective devices designed to afford protection to both persons and property in the event of a vehicular collision.

By way of illustration, the category of warning devices includes such items as conventional traffic signs and traffic signals, emergency signs and signals displayed to warn of the temporary existence of a dangerous situation, etc.

Protective devices fall into two classes, i.e., those embodied in a vehicle as part of the construction thereof, and those which are viewed as being separate from the construction of the vehicle regardless of whether the latter are subsequently affixed in some manner to the exterior of the vehicle. Examples of protective devices which fall within the first class, are such things as padded dashboards, seat belts, etc. In the second class, are such things as various types of safety barriers designed to afford protection in the event of a vehicular collision between a moving vehicle and a stationary object or between a moving vehicle and another moving object.

The present invention relates to a protective device of the type falling within the second class of items discussed hereinabove. The features include protection against immoveable objects such as bridge peers, light stations, guard rails, sign posts, concrete walls, abutments, and the like. Typically, an attempt is made to afford protection against a moving vehicle striking such immovable objects by positioning stationary traffic safety barriers in proximity to the immovable object and arranged so that they lie along the path which the moving vehicle would most likely follow if it were to strike the immovable object. Such stationary traffic safety barriers are most often intended to function as an impact attenuation device; namely, to attenuate the impact produced as a result of the collision between the moving vehicle and the immovable object. Dissipating kinetic energy in a controlled manner will help to reduce the severity of the vehicular collision as defined by the extent of injury suffered by individuals riding in the moving vehicle and the amount of property damage incurred by both the moving vehicle and the immovable object.

For ease of reference during the following discussion, such stationary traffic safety barriers will be referred to as impact attenuation devices. One of the earliest attempts made at providing an impact attenuation system involved the employment of systems composed of 55-gallon drums. Patterns were cut into lids of the drums to reduce the crushing strength of the system, i.e., to provide the system with the desired controlled crushing characteristics. The successful implementation of this 55-gallon drum modular crash cushion system prompted a study of the feasibility of employing other possible forms of stationary energy absorbing barriers. In this regard, corrugated steel pipe was found to have favorable characteristics when it was statically crushed tested. Moreover, the availability of corrugated steel pipe having a wide range of thickness and diameter dimensions made it feasible to employ a poly-modular design to which the physical characteristics of the stationary energy absorbing barrier could be varied on a row to row basis.

Examples of other forms of impact attenuation systems which are known to exist in the prior art include the following: a hydrocushion cell barrier composed of an array of water filled plastic cells operable such that upon impact, the water is ejected through orifices in the top of the cells at a controlled rate; a barrier formed by an array of nine to seventeen sand filled frangible plastic barrels, which is characterized by its versatile applicability; a U-shaped tubular guard rail energy absorbing barrier that absorbs energy by means of the motion of supporting telescopic tubes such that upon impact, the impact forces are transmitted axially to arms, which contain many stainless steel torus elements that are squeezed between two cylindrical tubes; a barrier in the form of a vehicle arresting system that is composed of a steel entrapping net positioned across a roadway, and which is particularly applicable for use in proximity to locations such as road dead ends, ferry landings, highway medians, and bridge overpasses, etc.; a light weight cellular concrete crash cushion barrier constructed of easily frangible vermiculite concrete with vertical voids wherein the vertical voids contribute to the controlled crushing characteristics of the barrier; for use primarily as part of a guard rail system, a barrier used on a fragmenting tube concept, which was originally developed for use in planned lunar landing modules, and in which energy is absorbed by forcing a thick-walled aluminum tube over a flared die, resulting in the shedding of the tube into small segments; and lastly, an energy absorbing barrier particularly applicable for use as part of a guard rail system in which thick walled steel rings are utilized.

In addition to the potential for danger imposed by immovable objects, which are to be found located along the nation's major highway and along its local roads, there is another situation, which has a potential for danger that one often encounters while traveling along these same major highways and local roads. Reference is had here to the hazardous condition often imposed by the presence on such highways and roads of men and equipment engaged in highway maintenance and repair operations. There is a need to protect such personnel and equipment from being struck by an errant moving vehicle. The impact attenuation systems which have been described herein previously are generally found to be unsuited to provide the desired degree of protection to the personnel and equipment while involved in conducting highway and road maintenance operations. To provide this needed protection, what is needed is an energy absorbing barrier which is portable in nature in contrast to the stationary nature of the energy absorbing barriers to which reference has been had herein.

Although most of the attention in the prior art has been directed toward providing various kinds of stationary energy absorbing barriers, there is known to exist in the prior art at least two different types of impact attenuation systems, the latter more commonly being viewed as comprising a portable system. One such portable energy absorbing system is in the form of a hydro-cell system that consists of five rows of thirteen polyvinyl chloride plastic cells enveloped in a corset-like membrane. The entire unit is mounted on a metal platform, which is designed to be attached to the rear of a highway service vehicle. Each cell contains approximately 3 1/2 gallons of a water-calcium chloride solution. The latter solution functions to provide the system with the desired control crushing characteristics. The hydro-cell portable energy absorbing system, although being portable in nature and relatively easy to install, has been found to suffer from the major disadvantage that can not simultaneously satisfy the energy absorption and minimum stopping distance, i.e., deceleration requirements for moving vehicles impacting there against at speeds in excess of 50 km/h (30 m.p.h).

Another known form of impact attenuation system is the modular crash cushion system, which is composed of thirty steel drums, i.e., ten rows with three drums per row. The thirty drums rest on a trailer, which is designed to be attached to a highway service vehicle at 5 points to provide the required degree of horizontal and vertical stability during impact. The principal disadvantage of the modular crash cushion portable energy absorbing system stems from the fact that it is 6 m (19 1/2 feet) long. As a consequence, because of the need to maintain a rigid interconnection between the trailer and the towing service vehicle at all times, this system has been shown to suffer from severe weight limitations as far as both the trailer on which the drums rest and the service vehicle which tows the trailer are concerned. In addition, because of its relatively long length, this system has proven to be unsuitable for use on the hilly and curvy sections of highways and roads, which are found to exist in many areas of the country.

Still another portable energy absorbing system employs hexagonal shaped cardboard cells filled with polyurethane foam in a flexible frame.

The present inventor developed a variety of systems which can be used in conjunction with either a stationary barrier or on a moving vehicle. These systems are disclosed in U.S. Patent No. 4,200,310 issued to J. Carney, III, on April 29, 1980; in U.S. Patent No. 4,645,375, issued to J. Carney, III, issued on February 24, 1987; and U.S. Patent No. 5,011,326 issued to J. Carney, III, on April 30, 1991. The Carney patents disclose stationary or portable impact attenuation systems which use a series of circular shaped cylinders which are attached together. The cylinders are made of a material which fails at a given and predictable force to cushion the blow.

Chapter 8 of the Roadside Design Guide published by the American Association of State Highway and Transportation Officials in 1989 discusses nine impact attenuation systems. The sandwich system such as that developed by HI-DRO uses round barrels placed in rows with the entire system wrapped in a belt and some of the rows separated by diaphragms. The cell cluster system as developed by HI-DRO also uses round cells clustered together and surrounded by a belt. The hex-foam sandwich system uses hexagonal shaped cardboard filled with polyurethane foam in a flexible frame. The guardrail energy absorbing terminal also uses hexagonal shaped cardboard filled with polyurethane foam in a flexible frame. Another system is sand-filled plastic barrels which are round and self-explanatory. The Connecticut Impact Attenuation System was developed and patented by the present applicant and uses an array of round barrels. The bullnose attenuator uses a guardrail that wraps around the vehicle during penetration and breaks off a series of posts to slow down the vehicle. The dragnet system is a net which slows the vehicle upon contact. Another system is the gravel-bed attenuator which is a pit of gravel.

While my prior systems have proven to be effective and commercially successful, there is always room for improvement. The prior systems were and are bulky because of the size of the cylinders used in the systems. The cylinders in the prior systems are all cylindrical and round in cross section. By using round cylinders, the prior art systems are wider than I have now found to be necessary to retain the effectiveness of the systems, and more material is used in the construction of the systems, thus causing them to be more costly than is desired.

What is needed, then, is a new and improved energy absorbing system, suitable for dissipating the energy created by the impact of an errant vehicle. The system should be particularly adaptable to provide protection to men and equipment engaged in highway and road maintenance and/or repair operations. This system must be capable of absorbing most of the energy dissipated in a high speed collision between a moving vehicle and a highway service vehicle. Moreover, the system should be capable of absorbing this energy in such a way that the acceleration and the acceleration rates to which the moving vehicle and the highway service vehicle are subjected as a consequence of a collision between them are within the guidelines specified by the Federal Highway Administration. Also, the use of the system should be unrestricted by the existence of hilly and/or curved sections of highways and roads. Furthermore, the system should be inexpensive to construct and employ. The system should be of a size and shape to minimize its dimensions in those directions which do not add to the effectiveness of the system. The system should be adaptable for use with stationary barriers also, in order to dissipate the energy of a crash by an errant vehicle and thereby protect the driver of the vehicle and his property. This system is presently lacking in the prior art.

An attenuation system according to the preamble of claim 1 is known from US-A-5 125 762.

### DISCLOSURE OF THE INVENTION

The present invention discloses an energy attenuation system which uses vertically standing, hollow, cylindrical energy dissipators having elliptical or oval shaped cross sections. The energy dissipators of my energy attenuation system are hollow cylinders. They are open at both ends (hence the use of the term "cylinders" rather than "barrels"), and have an elliptical cross section. Using cylinders rather than barrels enables me to better control the shape and manner of the crushing of the cylinders under impact loading and thereby control the response of the vehicle to reduce injury and property damage.

While the cross section shape of the cylinders is referred to as being "elliptical", which term denotes a symmetry of cross section shape along both the major axis and the minor axis, the term in this application is used to denote a cylinder that has a cross section that is oblong in shape, i.e., a shape that has a major axis and a minor axis but which does not have to be symmetrical. Thus, the term "elliptical" as used herein will be considered to include cylinders that have cross sections that are egg shaped, oval, oblong, etc. However, the term does not include cylinders that are round in cross section. The significance of this distinction will be explained in conjunction with the description of the preferred embodiment of the invention.

The cylindrical energy dissipators with elliptical shaped cross sections of the present invention can be used in connection with other energy attenuation systems previously known which relied upon cylinders having round cross sections. However, as the preferred embodiment of my invention, I disclose an energy attenuation system which is simple in its design and construction when compared to the prior art devices and which is relatively inexpensive to construct.

In the application of my system in conjunction with a road service vehicle, I use a bracket which is attached to the truck and a brace which is pivotally attached to the bracket. The brace is then attached to a plate. One or more elliptical cylinders are attached to the plate such that the minor diameters of the elliptical cylinders run substantially parallel to the plate and the major diameters of the elliptical cylinders run substantially perpendicular to the plate. If more than one cylinder is used, the cylinders are joined together. The cylinders have an axis and the cylinders are arranged so that their axis are substantially vertical. Thus, the cylinders will be positioned to have a top and a bottom. A slit is cut out of the cylinders proximate to the top and the bottom. The cylinders are attached to the plate using standard bolts or any other well known attachment method. Similarly, the cylinders are attached to one another using general recognized types of attachment such as by bolting or welding. The bracket includes a telescoping arm attached to the lower portion of the work piece. When the telescoping arm is extended, the plate rotates about a fixed pivot point near the top of the plate so that the system can be raised off the ground.

It is therefore an object of the present invention to provide a novel and improved form of energy absorbing system operable as an impact attenuation device to reduce the severity of vehicular collisions.

It is another object of the present invention to provide such an energy absorbing system which is capable of being employed either as a portable energy absorbing system or as a stationary energy absorbing barrier.

A further object of the present invention is to provide such an energy absorbing system which is particularly suited for protection of men and equipment while the latter engage in the performance of highway maintenance and repair operations.

Yet another object of the present invention is to provide such an energy absorbing system which is capable of dissipating the energy produced during a vehicular collision in such a way that the accelerations to which vehicles are subjected during such collisions fall within the prescribed guidelines established by the Federal Highway Administration for such events.

Still another object of the present invention is to provide such an energy absorbing system which is capable of being employed on hilly and curved sections as well as level and straight sections of highways and roads.

Still a further object of the present invention is to provide such an energy absorbing system which is both inexpensive to construct and easy to employ.

Still a further object of the present invention is to provide an energy absorbing system, which is capable of sustaining a greater burden of collision using a shorter length of system.

A still further object of the present invention is to provide a system which is of a reduced size without reducing its effectiveness when compared to prior systems.

A still further object of the present invention is to provide a longer collapse stroke with the same material and/or minor diameter.

A further object of the present invention is to provide a resisting force over a longer stroke.
Fig. 1 is a perspective view of the impact attenuation system of the present invention as attached to a truck as a work piece.
Fig. 2 is a plan view of the impact attenuation system of the present invention as attached to a truck as a work piece.
Fig. 2a is a plan view of the impact attenuation system of the present invention in a simpler form than the structure of Fig. 2.
Fig. 3 is a side view of the impact attenuation system of the present invention as attached to a truck as a work piece in an operating position.
Fig. 4 is a side view of the impact attenuation system of the present invention as attached to a truck as a work piece in a traveling position.
Fig. 5 is a perspective view of a cylinder of the present invention detailing the slits.
Fig. 6 is a side view of a cylinder of the impact attenuation system receiving an automobile in a head-on collision.
Fig. 7 is a plan view of the impact attenuation system of the present invention in its simplest form as attached to a truck as a work piece.
Fig. 7a shows the system of Fig. 7 with bracing to increase the energy dissipation capacity of the system.
Fig. 8 is a side view of the impact attenuation system of the present invention as attached to an off-ramp divider as a stationary work piece.
Fig. 9 is a plan view of the impact attenuation system of Fig. 8.
Fig. 10 is a plan view of the impact attenuation system of my invention wherein the elliptical cylinders are aligned in two parallel rows with the adjacent cylinders being in staggered relationship rather than in a side-by-side relationship.

### BEST MODE FOR CARRYING OUT THE INVENTION

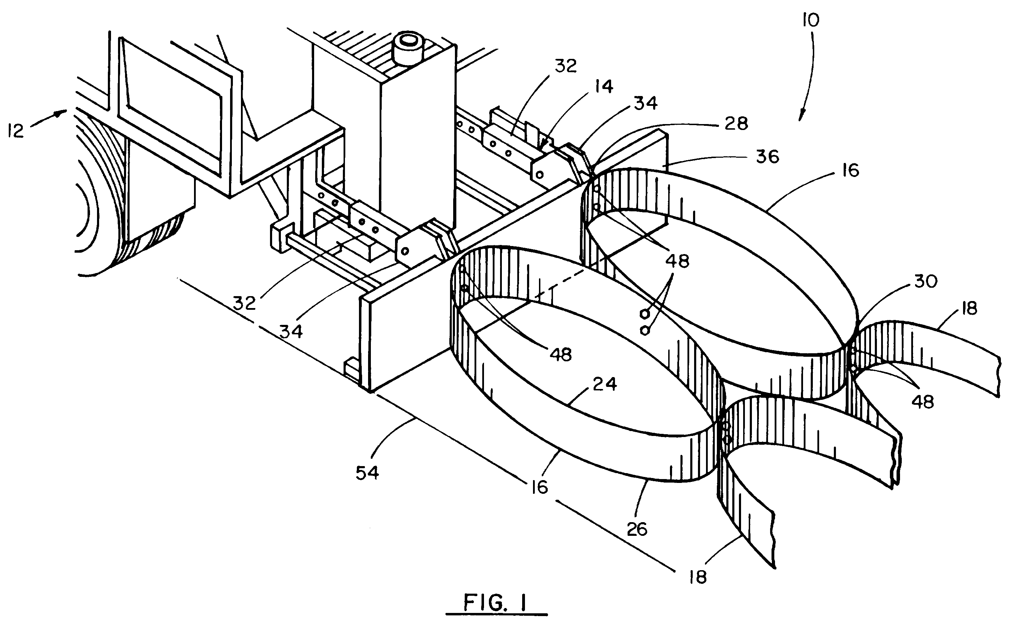

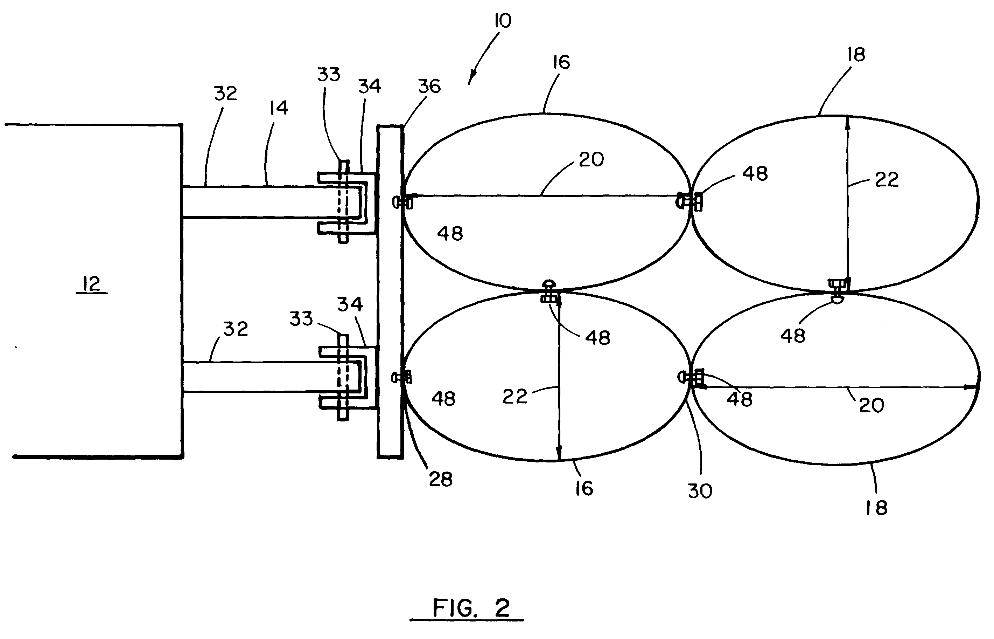

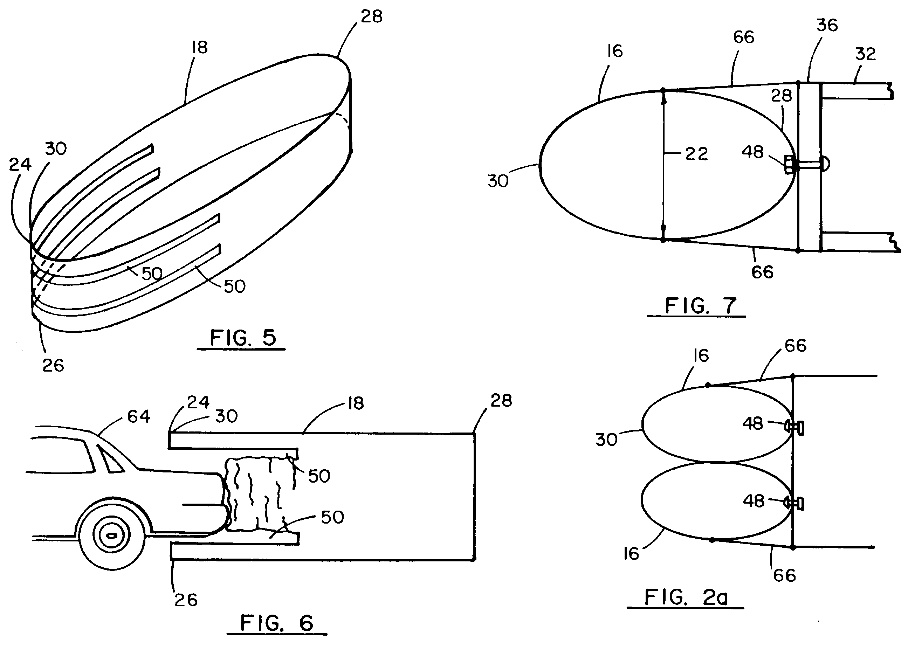

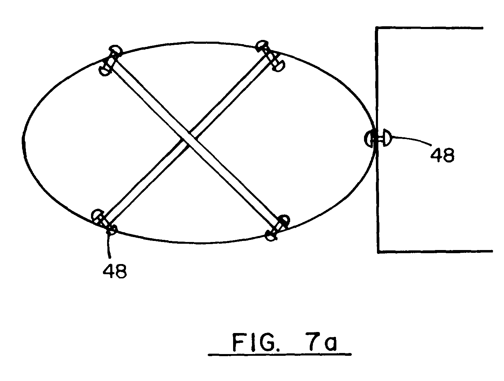

Referring now to Figs. 1 and 2 there is shown generally at **10** the impact attenuation system of the present invention. Impact attenuation system has attachment member **14** and elliptical cylinders **16**, **18**. Fig. 1 and Fig. 2 shows first elliptical cylinders **16** attached to work piece **12** which is a truck. Second elliptical cylinders **18** are attached to first elliptical cylinders **16**. Cylinders **16**, **18**, have major diameter **20**, minor diameter **22**, top **24**, bottom **26**, front **28**, and back **30**. Attachment member **14** generally consists of plate **36** attached to brace **34** which is attached to bracket **32** by pin **33**. The cylinders may be braced as shown in Fig. 7a to increase their stiffness and increase their energy dissipation capacities. This bracing could be provided in one, several, or all of the cylinders of a multi-cylinder configuration of the system of my invention.

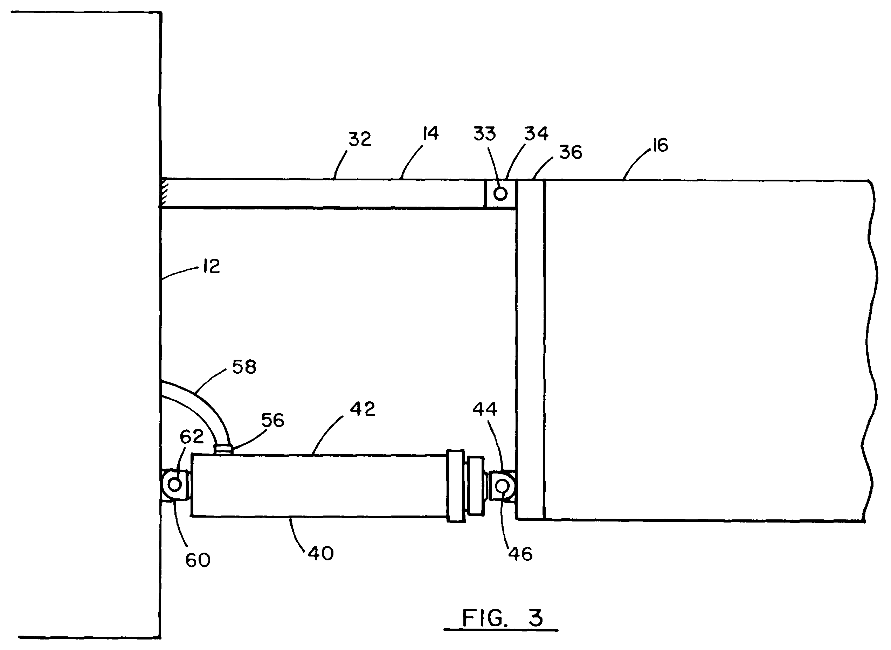

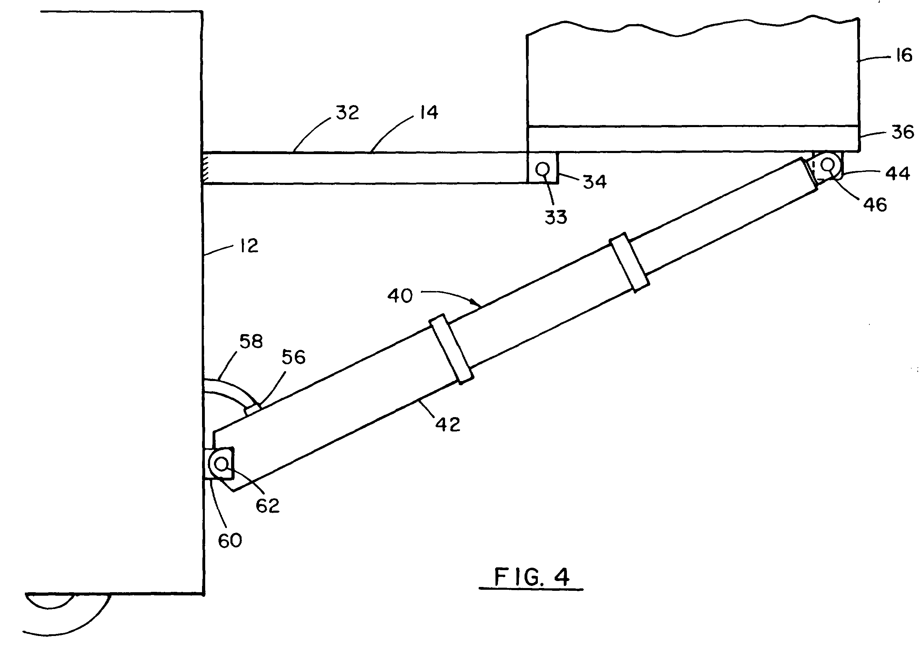

Referring now to Figs. 3 and 4 there is shown generally at **40** the mechanism for raising the impact attenuation system of the present invention into a stored position when not in use or during the movement of the truck from one work location to another. This is a known system for raising an impact attenuation system into a stored position, and other mounting structures can be used without departing from the spirit of the invention.

Mechanism **40** includes hydraulic cylinder **42** attached to second bracket **44** which attaches to plate **36** by second pin **46** and to workpiece **12** by third bracket **60** and third pin **62**. Cylinder **42** has opening **56** to receive hydraulic fluid from hose **58**. As cylinder **42** is filled and extended, plate **36** pivots about pins **33** to raise cylinder **16**.

Cylinders **16** are attached to plate **36** by bolts **48** in the preferred embodiment. However, cylinders **16**, **18** can be attached to plate **36** in any convenient manner such as by bolts, rivets, or by welding. Cylinders **16**, **18** are secured proximate to top **24** and bottom **26** by bolts **48**.

As shown in Figs. 5 and 6, at top **24** and bottom **26** of back **30** of rear cylinder **18** there is placed an arcuate slit **50** which runs radially around a portion of the circumference of cylinders **18**. This allows proper failure and prevents colliding vehicle **64** from submarining under or vaulting over cylinder **18**. If The system is constructed using a single cylinder **16** or a single row of cylinders **16**, Then cylinders **16** is provided with slit **50** on rear side **30**.

Fig. 7 shows The system **10** in its simplest embodiment. Cylinder **16** having front **28** and back **30** is attached to plate **36** by bolts **48** (one each at The top and bottom of cylinder **16**). Bracket **32** joins plate **36** to workpiece (not shown) in any convenient manner. Cables **66** can be used to provide lateral stability to cylinder **16**. Cables **66** attach proximate to end of minor diameter **22** and to the spaced ends of plate **36**. The cables can be attached at the mid-point of the cylinder and The mid-point of the plate **36** or at the top and bottom of each.

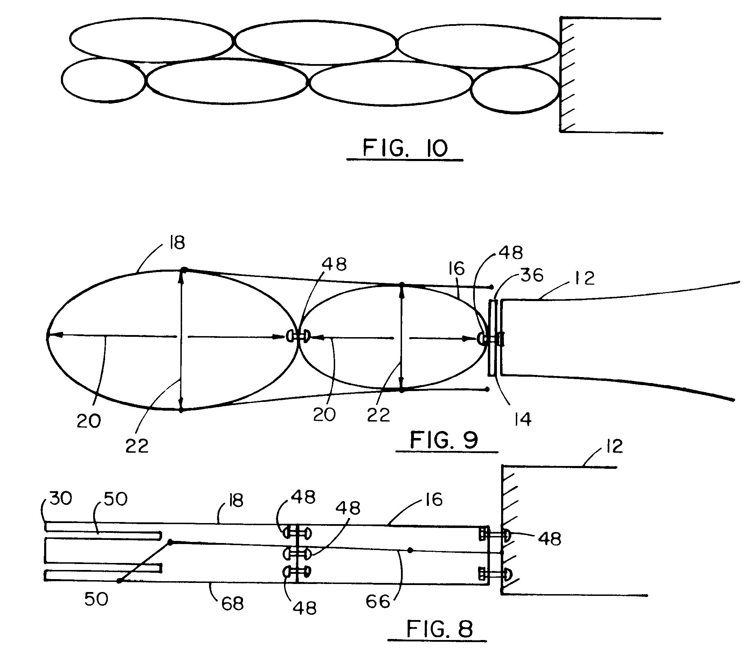

Referring now to Figs. 8 and 9 There is shown generally at **10** still another embodiment of the present invention. In this instance, first elliptical cylinder **16** is attached to a work piece **12** either directly, or through an intermediary structure **14** such as plate **36**, by bolt **48**. In this instance, work piece **12** is an off-ramp divider. As is true throughout, cylinder **16** has major diameter **20** and minor diameter **22**. Major diameter runs axially along the direction of median divider **12**. In this instance, second elliptical cylinder **18** attaches to first elliptical cylinder **16** by bolts **48**. As can be seen from Figs. 8 and 9, first elliptical cylinder **16** is attached to second elliptical cylinder **18** such that the major diameters **20** are in substantial alignment with the minor diameter **22** being substantially parallel. Cables **66** attach to divider **12** at one end and to ground **68** at the other end. In between the two ends, cables **66** attaches to cylinders **16**, **18**, proximate to the ends of their minor diameters **22** at or near the mid-point of their heights. Cables **66** help to hold the cylinders in position during impact and slits **50** are provided in rear cylinder **18** proximate to back **30** to prevent submarining and vaulting. Cables **66** prevent cylinders **16**, **18** from rotating and exposing divider **12**.

Fig.7 shows single cylinder **16** attached to work piece. Figs. 1-4 show plural cylinders **16**, **18** attached in parallel. Figs. 8 and 9 show plural cylinders **16**, **18** in series. However, the embodiments can be provided with any number of cylinders **16**, **18** in series as well as in parallel at the same time. Therefore, 3, 4, 5, or more cylinders can be attached together to reach the desired results.

Referring now to Figure 10, an alternate arrangement of the elliptical cylinders of my system can be seen. In this arrangement, the two parallel rows of cylinders have the cylinders in adjacent rows in staggered relationship rather than in a side-by-side arrangement. This arrangement of the cylinders gives greater resistance to crushing upon impact and therefore allows the use of fewer cylinders. Also, this system is not as wide as the system using the cylinders in a side-by-side arrangement.

In the preferred embodiment, when system **10** is mounted onto truck **12** as shown in Figs. 1-4, clearance between bottom **26** and ground **54** is nominal (generally in the range of 15 cm (six inches) in order for the cylinder **18** to "catch" an errant vehicle in the manner illustrated in Fig. 6. When truck **12** is traveling from one work site to another, system **10** is raised higher so that it does not bump on the ground and wear on the bottom **26** of system **10**.

Presently, under Federal Highway Administration guidelines, an impact attenuation system must perform satisfactorily under the impact between a stationary barrier and a 2000 kg (forty-five hundred pound) vehicle travelling 70 km/h (forty-five miles per hour). However, in the near future, the standards will require that a 2000 kg (forty-five hundred pound) vehicle be brought to a controlled stop under a 100 km/h (sixty miles per hour) impact. The limiting factor of the above equation is that the acceleration must be kept within certain limits because the human body can only withstand certain acceleration or, in this case, deceleration. I have found that to produce a controlled stop of a 2000 kg (forty-five hundred pound) vehicle going 70 km/h (forty-five miles per hour), a system as shown in Fig. 2a with the cylinders having a major diameter of 2.5 m (eight feet) and a minor diameter of 1.2 m (four feet) will be sufficient to meet the criteria. Besides being larger and more cumbersome, a similar system using round cylinders having a diameter of eight feet will not accomplish the same satisfactory results.

Figs. 1-10 show specific embodiments of the present impact attenuation system.

## Claims

1. An attenuation system (10) mountable to a workpiece (12) wherein the workpiece is proximately located to an automobile traffic passageway and has a longitudinal direction which is parallel to the direction of flow of traffic along the passageway comprising;
a. means (14) for attaching the attenuation system to the workpiece;
b. a first cylinder (16), the first cylinder having an elliptical cross section with a major diameter (20) and a minor diameter (22), a top (24) and a bottom (26), a front (28) and a back (30), the first cylinder (16) attached at its front (28) to the means (14) for attaching the attenuation system to the workpiece (12)
characterised in that
c. the back (30) of the first cylinder (16) is distally located from the front along the major diameter (20) whereby the major diameter is parallel to the longitudinal direction of the workpiece; and
d. a first radial slit (50) is located proximate to the top (24) of first said cylinder.

2. An attenuation system according to claim 1, characterised in that the first cylinder (16) has a second radial slit (50) proximate to the bottom (26).

3. An attenuation system according to any of the preceding claims, characterised in that the major diameter (20) and the minor diameter (22) are both substantially parallel to the plane of the automobile traffic passageway.

4. An attenuation system according to any of the preceding claims characterised in that the means (14) for attaching the attenuation system to the workpiece (12) is attached to the first cylinder (16) at one point proximate to the top (24) and at another point proximate to the bottom (26).

5. An attenuation system according to any of the preceding claims, characterised in that a second elliptical-shaped cylinder (18) is provided, the second elliptical-shaped cylinder (18) having a major diameter (20), a minor diameter (22), a top (24) and a bottom (28), a front (28) and a back (30) distally located from the front along the major diameter (20); the first and second elliptical-shaped cylinders (16 and 18) being attached to the means (14) for attaching the attenuation system to the workpiece proximate to the fronts (28), the major diameters (20) of the elliptical-shaped cylinders (16 and 18) being aligned in substantial parallel alignment, and the elliptical-shaped cylinders being attached to one another proximate to said minor diameters (22).

6. An attenuation system according to claim 5, characterised in that both the first and second elliptical-shaped cylinders (16 and 18) each have a first radial slit (50) proximate to the top (24) and a second radial slit (50) proximate to the bottom (26).

7. An attenuation system according to claim 5 or 6, characterised in that both the first and second elliptical-shaped cylinders (16 and 18) attach to the means (14) for attaching the attenuation system to the workpiece (12) at two points, one proximate to the top (24) and the other proximate to the bottom (26).

8. An attenuation system according to any of the preceding claims, characterised in that the means (14) for attaching the attenuation system to the workpiece comprises:
a. a bracket (32) attached to the workpiece;
b. a plate (36) attached to the elliptical-shaped cylinders; and
c. a brace (34) joining the bracket to the plate.

9. An attenuation system according to any of the preceding claims, characterised in that the means (14) for attaching the attenuation system (10) to the workpiece (12) is pivotally attached to the workpiece.

10. An attenuation system according to any of the preceding claims, characterised in that means (40) for raising the system are provided.

11. An attenuation system according to claim 10, characterised in that the means (40) for raising the system comprises a hydraulic cylinder (42) attaching the workpiece (12) and the means (14) for attaching the attenuation system to the workpiece.

12. An attenuation system according to any of the preceding claims, characterised in that the workpiece is a truck.

13. An attenuation system according to claim 5, characterised in that the first and second elliptical-shaped cylinders (16 and 18) are connected to each other at or near the top (24) and at or near the bottom (26) of the cylinders.

14. An attenuation system according to claim 5, characterised in that at least a third and fourth cylinder of similar shape are provided, the cylinders being aligned in two rows, the major diameter (20) of each cylinder being parallel to the major diameter of every other cylinder and the minor diameters (22) of each cylinder being parallel to the minor diameter of every other cylinder.

15. An attenuation system according to claim 14, characterised in that the two rows of cylinders are in parallel side by side relationship and are connected to each other at the points where they touch.

16. An attenuation system according to claim 15, characterised in that the connection of the cylinders in side by side relationship is at a point at or proximate to the top (24) of the cylinders and a second connection at or proximate to the bottom (26) of the cylinders.

17. An attenuation system according to any of claims 1 to 8, or 13 to 16, for dissipating the energy generated when an errant vehicle collides with a protected structure, characterised in that the workpiece is the protected structure.

18. An attenuation system according to claim 17, characterised in that cables (66) are provided for further connecting the cylinder to the protected structure and to the ground.

19. An attenuation system according to claim 14, characterised in that the cylinders in adjacent rows are in staggered relationship.

20. An attenuation system according to claim 14, characterised in that the cylinders furthest from the protected structure have at their peripherial area furthest from the protected structure a slit (50) cut in the top (24) and the bottom (26) thereof, the slits being substantially perpendicular to the axis of the cylinders.

21. An attenuation system according to claim 17, characterised in that the cylinders have a major diameter (20) of approximately 2.5m (8ft) and a minor diameter (22) of approximately 1.2m (4ft).

## Patentansprüche

1. Dämpfungssystem (10), das an ein Werkstück (12) montierbar ist, wobei sich das Werkstück in der Nähe eines Kraftfahrzeugverkehrsdurchgangs befindet und eine Längsrichtung hat, die parallel zur Verkehrsflußrichtung entlang dem Verkehrsdurchgang ist, umfassend:
a. ein Mittel (14) zum Befestigen des Dämpfungssystems am Werkstück;
b. einen ersten Zylinder (16), der einen elliptischen Querschnitt mit einem größeren Durchmesser (20) und einem kleineren Durchmesser (22), eine Oberseite (24) und eine Unterseite (26), eine Vorderseite (28) und eine Rückseite (30) hat, wobei der erste Zylinder (16) über seine Vorderseite (28) an dem Mittel (14) zum Befestigen des Dämpfungssystems am Werkstück (12) befestigt ist,
dadurch gekennzeichnet, daß
c. sich die Rückseite (30) des ersten Zylinders (16) von der Vorderseite entlang dem größeren Durchmesser (20) entfernt befindet, so daß der größere Durchmesser parallel zur Längsrichtung des Werkstücks ist; und
d. ein erster radialer Schlitz (50) sich in der Nähe der Oberseite (24) des genannten ersten Zylinders befindet.

2. Dämpfungssystem nach Anspruch 1, dadurch gekennzeichnet, daß der erste Zylinder (16) einen zweiten radialen Schlitz (50) in der Nähe der Unterseite (26) aufweist.

3. Dämpfungssystem nach einem der vorherigen Ansprüche, dadurch gekennzeichnet, daß der größere Durchmesser (20) und der kleinere Durchmesser (22) im wesentlichen parallel zur Ebene des Kraftfahrzeugverkehrsdurchgangs sind.

4. Dämpfungssystem nach einem der vorherigen Ansprüche, dadurch gekennzeichnet, daß das Mittel (14) zum Befestigen des Dämpfungssystems am Werkstück (12) am ersten Zylinder (16) an einer Stelle in der Nähe der Oberseite (24) und an einer anderen Stelle in der Nähe der Unterseite (26) befestigt ist.

5. Dämpfungssystem nach einem der vorherigen Ansprüche, dadurch gekennzeichnet, daß ein zweiter elliptischer Zylinder (18) vorgesehen ist, der einen größeren Durchmesser (20), einen kleineren Durchmesser (22), eine Oberseite (24) und eine Unterseite (26), eine Vorderseite (28) und eine Rückseite (30) hat, die sich von der Vorderseite entlang dem größeren Durchmesser (20) entfernt befindet, wobei der erste und der zweite elliptische Zylinder (16 und 18) an dem Mittel (14) zum Befestigen des Dämpfungssystems am Werkstück in der Nähe der Vorderseite (28) befestigt sind, wobei die größeren Durchmesser (20) der elliptischen Zylinder (16 und 18) im wesentlichen parallel ausgerichtet sind, und die elliptischen Zylinder in der Nähe der genannten kleineren Durchmesser (22) aneinander befestigt sind.

6. Dämpfungssystem nach Anspruch 5, dadurch gekennzeichnet, daß sowohl der erste als auch der zweite elliptische Zylinder (16 und 18) einen ersten radialen Schlitz in der Nähe (50)[*1] der Oberseite (24) und einen zweiten radialen Schlitz (50) in der Nähe der Unterseite (26) haben.

7. Dämpfungssystem nach Anspruch 5 oder 6, dadurch gekennzeichnet, daß sowohl der erste als auch der zweite elliptische Zylinder (16 und 18) am Mittel (14) zum Befestigen des Dämpfungssystems am Werkstück (12) an zwei Stellen befestigt sind, wobei sich eine in der Nähe der Oberseite (24) und die andere in der Nähe der Unterseite (26) befindet.

8. Dämpfungssystem nach einem der vorherigen Ansprüche, dadurch gekennzeichnet, daß das Mittel (14) zum Befestigen des Dämpfungssystems am Werkstück folgendes umfaßt:
a. einen am Werkstück befestigten Träger (32);
b. eine an den elliptischen Zylindern befestigte Platte (36); und
c. eine Klammer (34), die den Träger mit der Platte verbindet.

9. Dämpfungssystem nach einem der vorherigen Ansprüche, dadurch gekennzeichnet, daß das Mittel (14) zum Befestigen des Dämpfungssystems (10) am Werkstück (12) drehbar am Werkstück befestigt ist.

10. Dämpfungssystem nach einem der vorherigen Ansprüche, dadurch gekennzeichnet, daß ein Mittel (40) zum Heben des Systems vorgesehen ist.

11. Dämpfungssystem nach Anspruch 10, dadurch gekennzeichnet, daß das Mittel (40) zum Heben des Systems einen am Werkstück (12) befestigten Hydrozylinder (42) und das Mittel (14) zum Befestigen des Dämpfungssystems am Werkstück umfaßt.

12. Dämpfungssystem nach einem der vorherigen Ansprüche, dadurch gekennzeichnet, daß das Werkstück ein Lastwagen ist.

13. Dämpfungssystem nach Anspruch 5, dadurch gekennzeichnet, daß der erste und der zweite elliptische Zylinder (16 und 18) an oder in der Nähe der Oberseite (24) und an oder in der Nähe der Unterseite (26) der Zylinder miteinander verbunden sind.

14. Dämpfungssystem nach Anspruch 5, dadurch gekennzeichnet, daß wenigstens ein dritter und vierter Zylinder mit ähnlicher Gestalt vorgesehen sind, wobei die Zylinder in zwei Reihen ausgerichtet sind, wobei der größere Durchmesser (20) jedes Zylinders parallel zum größeren Durchmesser jedes anderen Zylinders und der kleinere Durchmesser (22) jedes Zylinders parallel zum kleineren Durchmesser jedes anderen Zylinders ist.

15. Dämpfunyssystem nach Anspruch 14, dadurch gekennzeichnet, daß die beiden Reihen von Zylindern eine parallele Seite-an-Seite-Beziehung haben und an den Stellen miteinander verbunden sind, an denen sie sich berühren.

16. Dämpfungssystem nach Anspruch 15, dadurch gekennzeichnet, daß sich die Verbindung der Zylinder in Seite-an-Seite-Beziehung an einer Stelle an oder in der Nähe der Oberseite (24) der Zylinder und eine zweite Verbindung sich an oder in der Nähe der Unterseite (26) der Zylinder befinden.

17. Dämpfungssystem nach einem der Ansprüche 1 bis 8 oder 13 bis 16 zum Ableiten der Energie, die erzeugt wird, wenn ein fehlgeleitetes Fahrzeug mit einer geschützten Struktur kollidiert, dadurch gekennzeichnet, daß das Werkstück die geschützte Struktur ist.

18. Dämpfungssystem nach Anspruch 17, dadurch gekennzeichnet, daß Seile (66) für eine weitere Verbindung des Zylinders mit der geschützten Struktur und mit dem Boden vorgesehen sind.

19. Dämpfungssystem nach Anspruch 14, dadurch gekennzeichnet, daß die Zylinder in benachbarten Reihen zueinander versetzt angeordnet sind.

20. Dämpfungssystem nach Anspruch 14, dadurch gekennzeichnet, daß die am weitesten von der geschützten Struktur entfernten Zylinder in ihrem Umfangsbereich, der am weitesten von der geschützten Struktur entfernt ist, einen Schlitz (50) aufweisen, der in die Oberseite (24) und in die Unterseite (26) davon geschnitten ist, wobei die Schlitze im wesentlichen lotrecht zur Achse der Zylinder sind.

21. Dämpfungssystem nach Anspruch 17, dadurch gekennzeichnet, daß die Zylinder einen größeren Durchmesser (20) von etwa 2,5 m (8 ft) und einen kleineren Durchmesser (22) von etwa 1,2 m (4 ft) haben.

## Revendications

1. Système d'atténuation (10) pouvant être monté sur une pièce (12) où la pièce est placée à proximité d'un passage de trafic routier et a un sens longitudinal qui est parallèle au sens d'écoulement du trafic le long du passage comprenant :
a. un moyen (14) pour fixer le système d'atténuation à la pièce ;
b. un premier cylindre (16), le premier cylindre ayant une coupe transversale elliptique avec un grand diamètre (20) et un petit diamètre (22), un haut (24) et un bas (26), un avant (28) et un arrière (30), le premier cylindre (16) étant fixé au niveau de son avant (28) au moyen (14) pour fixer le système d'atténuation à la pièce (12)
caractérisé en ce que
c. l'arrière (30) du premier cylindre (16) est situé distalement par rapport à l'avant le long du grand diamètre (20) si bien que le grand diamètre est parallèle au sens longitudinal de la pièce ; et
d. une première fente radiale (50) est située à proximité du haut (24) dudit premier cylindre.

2. Système d'atténuation selon la revendication 1, caractérisé en ce que le premier cylindre (16) a une deuxième fente radiale (50) à proximité du bas (26).

3. Système d'atténuation selon l'une quelconque des revendications précédentes, caractérisé en ce que le grand diamètre (20) et le petit diamètre (22) sont tous les deux sensiblement parallèles au plan du passage de trafic routier.

4. Système d'atténuation selon l'une quelconque des revendications précédentes, caractérisé en ce que le moyen (14) pour fixer le système d'atténuation à la pièce (12) est fixé au premier cylindre (16) au niveau d'un point proche du haut (24) et au niveau d'un autre point proche du bas (26).

5. Système d'atténuation selon l'une quelconque des revendications précédentes, caractérisé en ce qu'un deuxième cylindre de forme elliptique (18) est fourni, le deuxième cylindre de forme elliptique (18) ayant un grand diamètre (20), un petit diamètre (22), un haut (24) et un bas (28), un avant (28) et un arrière (30) situé distalement par rapport à l'avant le long du grand diamètre (20) ; les premier et deuxième cylindres de forme elliptique (16 et 18) étant fixés au moyen (14) pour fixer le système d'atténuation à la pièce à proximité des avants (28), les grands diamètres (20) des cylindres de forme elliptique (16 et 18) étant alignés selon un alignement sensiblement parallèle, et les cylindres de forme elliptique étant fixés l'un à l'autre à proximité desdits petits diamètres (22).

6. Système d'atténuation selon la revendication 5, caractérisé en ce que les deux premier et deuxième cylindres de forme elliptique (16 et 18) ont chacun une première fente radiale (50) à proximité du haut (24) et une deuxième fente radiale (50) à proximité du bas (26).

7. Système d'atténuation selon la revendication 5 ou 6, caractérisé en ce que les deux premier et deuxième cylindres de forme elliptique (16 et 18) se fixent au moyen (14) pour fixer le système d'atténuation à la pièce (12) au niveau de deux points, un proche du haut (24) et l'autre proche du bas (26).

8. Système d'atténuation selon l'une quelconque des revendications précédentes, caractérisé en ce que le moyen (14) pour fixer le système d'atténuation à la pièce comprend :
a. un support (32) fixé à la pièce ;
b. une plaque (36) fixée aux cylindres de forme elliptique ; et
c. une bride de liaison (34) joignant le support à la plaque.

9. Système d'atténuation selon l'une quelconque des revendications précédentes, caractérisé en ce que le moyen (14) pour fixer le système d'atténuation (10) à la pièce (12) est fixé de manière pivotante à la pièce.

10. Système d'atténuation selon l'une quelconque des revendications précédentes, caractérisé en ce qu'un moyen (40) pour lever le système est fourni.

11. Système d'atténuation selon la revendication 10, caractérisé en ce que le moyen (40) pour lever le système comprend un cylindre hydraulique (42) fixant la pièce (12) et le moyen (14) pour fixer le système d'atténuation à la pièce.

12. Système d'atténuation selon l'une quelconque des revendications précédentes, caractérisé en ce que la pièce est un camion.

13. Système d'atténuation selon la revendication 5, caractérisé en ce que les premier et deuxième cylindres de forme elliptique (16 et 18) sont connectés l'un à l'autre au niveau du ou près du haut (24) et au niveau du ou près du bas (26) des cylindres.

14. Système d'atténuation selon la revendication 5, caractérisé en ce qu'au moins un troisième et un quatrième cylindre de forme semblable sont fournis, les cylindres étant alignés sur deux rangées, le grand diamètre (20) de chaque cylindre étant parallèle au grand diamètre de chaque autre cylindre et le petit diamètre (22) de chaque cylindre étant parallèle au petit diamètre de chaque autre cylindre.

15. Système d'atténuation selon la revendication 14, caractérisé en ce que les deux rangées de cylindres sont côte à côté en relation parallèle et sont connectées l'une à l'autre au niveau des points où elles se touchent.

16. Système d'atténuation selon la revendication 15, caractérisé en ce que la connexion des cylindres côte à côte en relation parallèle est effectuée à un point au niveau du ou proche du haut (24) des cylindres et une deuxième connexion au niveau du ou proche du bas (26) des cylindres.

17. Système d'atténuation selon l'une quelconque des revendications 1 à 8, ou 13 à 16, pour dissiper l'énergie générée quand un véhicule errant entre en collision avec une structure protégée, caractérisé en ce que la pièce est la structure protégée.

18. Système d'atténuation selon la revendication 17, caractérisé en ce que des câbles (66) sont fournis pour connecter davantage le cylindre à la structure protégée et au sol.

19. Système d'atténuation selon la revendication 14, caractérisé en ce que les cylindres dans des rangées adjacentes sont en quinconce.

20. Système d'atténuation selon la revendication 14, caractérisé en ce que les cylindres les plus éloignés de la structure protégée ont au niveau de leur surface périphérique la plus éloignée de la structure protégée une fente (50) coupée dans le haut (24) et le bas (26) de celle-ci, les fentes étant sensiblement perpendiculaires à l'axe des cylindres.

21. Système d'atténuation selon la revendication 17, caractérisé en ce que les cylindres ont un grand diamètre (20) d'approximativement 2,5 m (8 pieds) et un petit diamètre (22) d'approximativement 1,2 m (4 pieds).
